(19) Europäisches Patentamt
European Patent Office
Office européen des brevets

(11) **EP 1 946 153 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(21) Anmeldenummer: **06807448.3**

(22) Anmeldetag: **20.10.2006**

(51) Int Cl.:
*G01V 3/12* *(2006.01)*    *H01Q 21/26* *(2006.01)*

(86) Internationale Anmeldenummer:
**PCT/EP2006/067636**

(87) Internationale Veröffentlichungsnummer:
**WO 2007/051721 (10.05.2007 Gazette 2007/19)**

(54) **MESSGERÄT UND VERFAHREN ZUR ORTUNG VON IN EINEM MEDIUM EINGESCHLOSSENEN OBJEKTEN MITTELS ELEKTROMAGNETISCHER HF-SIGNALE**

MEASURING DEVICE AND METHOD FOR LOCATING OBJECTS ENCLOSED IN A MEDIUM, USING HIGH-FREQUENCY ELECTROMAGNETIC SIGNALS

APPAREIL DE MESURE ET PROCÉDÉ DE LOCALISATION D'OBJETS CONTENUS DANS UN MILIEU À L'AIDE DE SIGNAUX HF ÉLECTROMAGNÉTIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **31.10.2005 DE 102005052367**

(43) Veröffentlichungstag der Anmeldung:
**23.07.2008 Patentblatt 2008/30**

(73) Patentinhaber: **ROBERT BOSCH GMBH**
**70442 Stuttgart (DE)**

(72) Erfinder:
• **MAHLER, Michael**
**70771 Leinfelden-Echterdingen (DE)**
• **HOFFMANN, Ulli**
**75223 Nieffern-Oeschelbronn (DE)**
• **KRAPF, Reiner**
**72770 Reutlingen (DE)**
• **WIELAND, Christoph**
**71083 Herrenberg-Kuppingen (DE)**
• **BRAUN, Heiko**
**70771 Leinfelden-Echterdingen (DE)**

(56) Entgegenhaltungen:
**EP-A2- 0 179 601      WO-A-99/01781**
**WO-A-2005/081015      WO-A2-02/086542**

**Beschreibung**

Stand der Technik

Die vorliegende Erfindung betrifft ein Messgerät sowie ein Verfahren zur Ortung von in einem Medium eingeschlossenen Objekten mittels elektromagnetischer Hochfrequenzsignale in einem Frequenzbereich zwischen 1 und 5 GHz.

Für die Ortung von in einem Medium eingeschlossenen Objekten werden in jüngster Zeit, neben den schon lange bekannten induktiven Sensoren, auch elektromagnetische Hochfrequenzsignale benutzt. Entsprechende Messgeräte besitzen beispielsweise Antennen zur Abstrahlung von hochfrequenten Radarsignalen bzw. Mikrowellen.

Antennen für Einrichtungen, welche zur Detektion von Objekts, wie beispielsweise Leitungen oder Rohren in Wänden, abgestimmt sind, sind im Allgemeinen auf das Senden oder Empfangen hochfrequenter (HF-) Radarsignal hin optimiert. Eine derartige Antenne ist beispielsweise aus der DE 10104863 A1 bekannt.

Die Antenne der DE 10104863 A1 ist eine einteilige, planare Antenne, die mit hoher mechanischer Stabilität auf einer Leiterplatte fixiert ist und ein relativ symmetrisches Richtdiagramm mit weitgehend reduzierten Nebenmaxima bzw. Nebenkeulen besitzt. Die bekannte Antenne besteht aus einer elektrisch leitenden Platte, welche aneinander gegenüber liegenden Rändern zwei abgewinkelte Seitenabschnitte aufweist, die als Leitungsarme zur Ankopplung der Antenne an ein Speisennetzwerk dienen.

Ortungsgeräte mit einer Antenne sind besonders vielseitig einsetzbar, da diese keinerlei Beschränkung auf magnetische Materialien oder das Vorhandensein einer Netzspannung erfordern, sondern jede Veränderung in der Dielektrizitätskonstanten des zu untersuchenden Materials registrieren, sodass während einer Messung beispielsweise auch Kunststoffrohre, Lufteinschlüsse bzw. Hohlräume detektiert werden können.

Nachteilig bei derartigen Geräten ist jedoch der Einfluss der Struktur von Wand, Decke oder Boden, also des das eingeschlossene Objekt umgebende Materials. Dieser Einfluss kann relativ groß sein, teilweise noch größer als der Einfluss des eingeschlossenen Objekts selbst. Es ist daher bei Radargeräten schwierig, Wandstrukturen und Inhomogenitäten von Objekten zu unterscheiden.

Ferner offenbaren die Druckschriften WO 99/01781 A1 und EP 0179601 A2 offenbaren ein handgehaltenes Messgerät zur Ortung von in einem Medium eingeschlossenen Objekten mittels elektromagnetischer HF-Signale. Das Messgerät umfasst ein Gehäuse und zumindest einen in diesem Gehäuse angeordneten Hochfrequenzsensor mit einer ersten Antennenanordnung, welche zumindest ein erstes Antennenelement aufweist, das in einer ersten Polarisationsebene abstrahlt und/oder empfängt. Die Antennenanordnung verfügt über zumindest ein weiteres Antennenelement, dessen Polarisationsebene gegenüber der Polarisationsebene des ersten Antennenelementes gedreht ist.

Offenbarung der Erfindung

Das erfindungsgemäße Messgerät zur Ortung von in einem Medium eingeschlossenen Objekten, welches als ein handgehaltenes Messgerät ausgeführt ist, mit den Merkmalen des Anspruchs 1 weist den Vorteil auf, dass der Hochfrequenzsensor des Messgeräts über zumindest zwei Antennenelemente verfügt, wobei die Polarisationsebenen der von diesen Antennen abgestrahlten oder empfangenen elektromagnetischen Wellen gegeneinander gedreht sind.

Es wird daher ein Mehrantennensystem verwendet, bei dem eine Mehrzahl von Antennen so angeordnet ist, dass die Abstrahlung bzw. der Empfang mit diesen Antennenelementen auf unterschiedlichen Polarisationsebenen verläuft, die insbesondere zueinander gedreht sind, sodass das Messsignal eines derartigen Sensors mit anisotropen, d.h. beispielsweise länglichen Objekten unterschiedlich stark wechselwirkt.

Dazu können beispielsweise die Antennenelemente selbst, bzw. Symmmetrrieebenen der Antennenelemente zueinander gedreht sein. Dies ist insbesondere vorteilhaft, da auch die Antennengeometrie bzw. Symmetrie die Polarisationsebene der abgestrahlten bzw. empfangenen Welle beeinflusst. Alternativerweise lässt sich auch durch eine relative Phasenverschiebung zweier HF-Signale, die auf zwei Antenenelemente gegeben werden die Abstrahlungsebene bzw. die Empfangsebene und somit auch insbesondere die Polarisationsebene variieren.

Offenbarung der Erfindung

Das erfindungsgemäße Messgerät zur Ortung von in einem Medium eingeschlossenen Objekten, welches als ein handgehaltenes Messgerät ausgeführt ist mit den Merkmalen des Anspruchs 1 weist gegenüber den bekannten Messgeräten, welche ebenfalls eine Ortung von Objekten mittels elektromagnetischer HF-Signale vornehmen, den Vorteil auf, dass der Hochfrequenzsensor des Messgeräts über zumindest zwei Antennenelemente verfügt, wobei die Polarisationsebenen der von diesen Antennen abgestrahlten oder empfangenen elektromagnetischen Wellen gegeneinander gedreht sind.

Es wird daher vorgeschlagen, in vorteilhafter Weise ein Mehrantennensystem zu verwenden, bei dem eine Mehrzahl von Antennen so angeordnet ist, dass die Abstrahlung bzw. der Empfang mit diesen Antennenelementen auf unterschiedlichen Polarisationsebenen verläuft, die insbesondere zueinander gedreht sind, sodass das Messsignal eines derartigen Sensors mit anisotropen, d.h. beispielsweise länglichen Objekten unterschiedlich stark wechselwirkt. Dazu können beispielsweise die Antennenelemente selbst, bzw. Symmmetrrieebenen der Antennenelemente zueinander gedreht sein. Dies ist insbesondere vorteilhaft, da auch die Antennengeometrie bzw. Symmetrie die Polarisationsebene der abgestrahlten Welle beeinflusst. Alternativerweise lässt sich auch durch eine relative Phasenverschiebung zweier HF-Signale, die auf zwei Antenenelemente gegeben werden die Abstrahlungsebene und somit auch insbesondere die Polarisationsebene variieren. Die Empfangsebene der Einzelantennen bleibt dabei aber immer Dieselbe.

Ein Hochfrequenzsensor mit einer Mehrzahl von Antennenelementen, wobei die Polarisationsebenen der von den Antennenelementen abgestrahlten bzw. empfangenen Wellen zueinander gedreht sind, besitzt den Vorteil, dass diese nicht nur in einer einzelnen Ebene, beispielsweise horizontal, messen, sondern in mehreren Ebenen ein entsprechendes Messsignal aufnehmen können. Dies führt bei stationärer Messung vorteilhafter Weise dazu, dass ein in einem Medium eingeschlossenes Objekt beispielsweise durch Differenzbildung der Messsignale der unterschiedlichen Messkanäle des Hochfrequenzsensors leichter aufgefunden werden kann. So muss bei einem einzelnen Antennenelement, welches ein Messsignal nur in einer Ebene aussendet der Sensor (oder alternativer Weise das Objekt selbst) bewegt werden, da nur Unterschiede in der Dielektrizitätskonstanten mit derartigen Messgeräten erfasst werden können. Ist ein Objekt beispielsweise horizontal in einer Wand verlegt, so findet ein horizontal polarisiertes Messsignal viel stärkere, zurückgeworfene Signale bzw. Amplituden als dies beispielsweise ein vertikal polarisiertes Messsignal detektieren würde, da das letztgenannte praktisch nur die Reflektionen der Wand bzw. der Wandstruktur misst. Ein derartiger Hochfrequenzsensor mit zumindest zwei gegeneinander verdrehten Polarisationsebenen zweier Antennenelementen bzw. zumindest zwei Antennenelementen, deren Abstrahlungs- bzw. Empfangsebene gegeneinander gedreht ist, braucht daher im Prinzip nicht bewegt werden.

Auch bei beweglichen Sensoren hilft ein Hochfrequenzsensor mit einem erfindungsgemäßen Mehrantennensystem in vorteilhafter Weise, die Wandstruktur aus dem Messsignal effektiv herauszurechnen. So ist beispielsweise bei einem Zweiantennensystem, bei dem die Antennen orthogonal zueinander ausgerichtet sind und die Messsignale mit entsprechend rechtwinklig zueinander ausgerichteten Polarisationsebenen aussendet werden, jedes Signal, das von beiden Antennen detektiert wird, also in beiden Messkanälen des Hochfrequenzsensors auftaucht, Bestandteil der Wandstruktur. Sind die Messsignale der beiden Antennenelemente unterschiedlich, so befindet sich das detektierte Objekt in einer Vorzugsrichtung einer der Polarisationsebenen ("Anisotropie des Signals").

Auch bei geschichteten Strukturen, wie sie beispielsweise bei einem Fußboden mit integrierter Fußbodenheizung gegeben sind, wird an jeder Schicht (Fliesen, Estrich, Styropor, Rohre, Beton) ein Signal erzeugt, da es zu einer Reflektion des ausgesendeten Messsignals aufgrund der jeweiligen Änderung der Dielektrizitätskonstanten des Materials kommt. Auch bei einem solchen System kann durch Differenzbildung der Messsignale der Untergrundeffekt eliminiert werden, sodass die Rohre an sich effektiver und leichter aufgefunden werden können.

Verfährt man ein Messgerät mit lediglich einem Antennenelement parallel zu einem Objekt, so kann dieses Gerät das Objekt nicht auffinden, da keinerlei Dielektrizitätskonstantenänderung zu detektieren ist. Bei einem Messgerät mit einer Mehrzahl von gegeneinander gedrehten Antennen bzw. gegeneinander gedrehten Polarisationsebenen der von den Antennen ausgesandten HF-Messsignale bekommt man dauerhaft eine Signaldifferenz zwischen den, den Antennenelementen zugewiesenen Messkanälen und kann so vorteilhafter Weise das Objekt leichter auffinden.

Darüber hinaus kann die Empfindlichkeit eines Hochfrequenzsensors bestmöglich angepasst werden, indem man die vorhandenen Antennenelemente differenziell betreibt. Das resultierende Messsignal steigt dabei kaum an. Bei einem Messgerät mit nur einem Antennenelement hat man das Problem des Übersteuerns durch Wandreflektionen und dergleichen, welches eine Signalauswertung und die Ortung des eigentlich eingeschlossenen Objekts stark erschweren. Die Differenzbildung der Messsignale, welche erst mit einem Mehrantennensystem und insbesondere einem System mit zueinander gedrehten Polarisationsebenen möglich wird, erhöht somit auch in vorteilhafter Weise die Dynamik der Ortungsmessung.

In der erfindungsgemäßen Ausführungsform gemäß Anspruch 1 verfügt das Messgerät über eine Wegsensorik, sodass es ermöglicht ist, die Messsignale des Messgeräts einer Position des Messgeräts zuzuordnen. Auf diese Weise ist es beispielsweise möglich, Messergebnisse des erfindungsgemäßen Messgeräts beispielsweise graphisch in einer Ausgabeeinheit derart darzustellen, dass genaue Angaben über die Position eines georteten Gegenstands gemacht werden können, da neben der Tatsache der Ortung des Gegenstands auch dessen Position über die mit dem Messgerät verbundene Wegsensorik detektiert wird.

In den Unteransprüchen finden sich vorteilhafte Weiterbildungen und Ausgestaltungen des in Anspruch 1 angegebenen Messgeräts.

Gemäß einer bevorzugten Ausführungsform des erfindungsgemäßen Messgeräts weist das Messgerät eine Mehrzahl n von Antennenelementen auf, deren Polarisationsebenen jeweils um einen Winkel α zueinander gedreht sind. Dabei ist es insbesondere vorteilhaft,

$$\alpha = \frac{180°}{n}$$

einen Winkel zu wählen, sodass die Abstrahlung oder der Empfang in unterschiedlichen Polarisationsebenen (vertikal, horizontal, 30° und dergleichen) verläuft, sodass die Wechselwirkung des Messsignals mit anisotropen, d.h. länglichen Objekten unterschiedlich stark ausfällt.

Gemäß einer bevorzugten Ausführungsform steht jedes Antennenelement aus zumindest zwei, beispielsweise Dreieck-förmigen, elektrisch leitfähigen Antennenabschnitten, die symmetrisch zu einem Messpunkt angeordnet sind und sich jeweils diametral gegenüber stehen. Insbesondere können dies Antennenabschnitte auch von einander getrennt ein, das Antennenelement somit zweistückig sein. In vorteilhafter Weise sind dabei benachbarte Antennenanschnitte weitgehend voneinander entkoppelt.

Dadurch lassen sich bei entsprechender Anregung dieser Antennenabschnitte elektromagnetische Felder ausbilden, welche sich ablösen, sodass eine Antenne gebildet ist. Die Geometrie der erfindungsgemäßen Anordnung ist dabei so gestaltet, dass ein sich ablösendes Feld sowohl im Quer- als auch im Längsschnitt im Raum oberhalb des Antennenelements ohne wesentliche Einbrüche bzw. Nebenmaxima ausgebildet wird und in einer Polarisationsebene ausgesendet wird.

Vorteilhafter Weise besitzt das erfindungsgemäße Messgerät Schaltmittel oder signalteilungsmittel, die es ermöglichen, ein einmal erzeugtes Sendesignal auf die einzelnen Antennenelemente aufzuteilen. So ist es beispielsweise beim Einsatz von zwei Mess- bzw. Polarisationsrichtungen, d.h. beispielsweise bei der Verwendung von zwei zueinander verdrehten gleichartigen Antennenelementen, die in vorteilhafter Weise insbesondere orthogonal zueinander ausgerichtet sind, die Aufteilung des Sendesignals auf zwei Messkanäle zur Ansteuerung der zwei Antennenelemente notwendig. Um den Aufwand zweier Signalerzeugungen zu reduzieren, kann ein erzeugtes Sendesignal nachträglich aufgeteilt werden. Bei der Aufteilung auf zwei Richtungen kann das Sendesignal in der notwendigen Leistung aufgeteilt werden. Im Standardfall werden dabei in vorteilhafter Weise die Leistungen im Verhältnis von Eingangsleistung des Sendesignals zu Anzahl der Aufteilungen geteilt. Eine andere Aufteilung ist aber ebenso möglich.

Gemäß einer bevorzugten Ausführungsform werden die Antennenelemente einer Antennenanordnung gleichphasig angesteuert. Jedoch ist es auch möglich, die Antennenelemente auch mit einer definierten Phasendifferenz von beispielsweise 90° oder 180° anzusteuern.

In einer weiteren bevorzugten Weiterbildung des erfindungsgemäßen Messgeräts verfügt dieses Gerät über eine zweite Antennenanordnung, welche Ihrerseits wiederum mit einer Mehrzahl m von Antennenelementen versehen ist, wobei auch die Polarisationsebenen der von diesen Antennenelementen abgestrahlten oder empfangenen HF-Signalen zueinander gedreht sind. Dies ist insbesondere dadurch möglich, dass die Antennenelementen selbst zueinander gedreht sind. bzw. die Abstrahlungsebenen dieser Antennenelemente zueinander gedreht sind.

In besonders vorteilhafter Weise lässt sich ein Mess- bzw. Ortungsgerät realisieren, bei welchem m = n erfüllt ist. Bei einem derartigen Messgerät mit zwei Antennenanordnungen, die ihrerseits jeweils eine gleiche Anzahl von Antennenelementen besitzen, kann ein einzelnes Hochfrequenzschaltungsteil des Messgeräts beide Antennenanordnungen ansteuern, indem das Signal dieses Hochfrequenzschaltteils mittels eines Umschalters alternativ oder durch entsprechende Signalteilungsmittel gleichzeitig auf die einzelnen Antennenelemente der Antennenanordnungen geleitet wird.

In vorteilhafter Weise verfügt ein solches Hochfrequenzschaltungsteil über eine Mehrzahl von Messkanälen, wobei die Anzahl der Messkanäle gleich der Anzahl der Antennenelemente einer Antennenanordnung ist.

Eine besonders vorteilhafte Ausführungsform des erfindungsgemäßen Messgeräts ergibt sich durch die Integration zusätzlicher Sensoren in oder am Gehäuse des Messgeräts. So kann beispielsweise ein zusätzlicher Infrarotsensor oder aber auch ein kapazitiver Sensor, ein induktiver Sensor oder ein Netzspannungssensor im oder am Messgerät integriert sein. Insbesondere für die Detektion von Fußboden-, Wand- oder Deckenheizungen ist es vorteilhaft, neben dem Hochfrequenzsensor mit seinen Antennenelementen beispielsweise einen oder mehrere Infrarotsensoren zu verwenden, da diese die Möglichkeit einer Wärmedetektion gewährleisten und so beispielsweise auch die Flussrichtung einer derartigen Heizung detektieren können.

Durch den Einsatz verschiedener Sensoren in dem erfindungsgemäßen Messgerät kann die Detektion von beispielsweise Heizungsrohren in einer sehr schwer detektierbaren Umgebung gewährleistet werden. Dadurch wird die Sicherheit des Anwenders, insbesondere im Hinblick auf die Möglichkeit der Beschädigung derartiger Rohre, verbessert.

Mir dem zugrunde liegenden Hochfrequenzverfahren zur Ortung von in einem Medium eingeschlossenen Objekten lassen sich in vorteilhafter Weise eine Mehrzahl von Antennenelementen, die in einem entsprechenden Messgerät angeordnet sind, wahlweise als Sender oder Empfänger des Messsignals betreiben. Insbesondere sind bei dem erfindungsgemäßen Verfahren zum Betrieb des handgehaltenen Messgeräts Mittel vorgesehen, die es ermöglichen, das Senden und / oder Empfangen des Messsignals mit einer unterschiedlichen Anzahl von Antennenelementen durchzuführen. Erfindungsgemäß ist ein Senden und Empfangen in verschiedenen Ebenen möglich, da die Antennenelemente derart ausgestaltet sind, dass Messsignale mit unterschiedlichen Polarisationsebenen gesendet und empfangen werden können. So kann beispielsweise das Messsignal in allen, gegeneinander gedrehten Mess- bzw. Polarisationsebenen gleichzeitig gesendet werden. Alternativer Weise kann das Messsignal beispielsweise nur ein einer Richtung, z.B. vertikal ausgesendet werden. Möglich ist auch ein Verfahren, bei dem das Messsignal zwar in einer Mehrzahl von Polarisationsrichtungen ausgesendet wird, dieses jedoch nacheinander erfolgt. So ist es beispielsweise sinnvoll, nur in einer Polarisationsrichtung zu senden und in mehreren, beispielsweise zwei Richtungen zu empfangen, da es sein kann, dass beispielsweise die Wand oder ein in der Wand eingeschlossenes Objekt die Phasenlage des Messsignals dreht. Bedenkt man noch, dass beispielsweise metallische Objekte einen Phasensprung des Messsignals erzeugen, ergeben sich auch hinsichtlich der Objekteigenschaften, d.h. einer Unterscheidung Metall / Nicht-Metall mittels des HF-Signals, weitere positive Zusatzinformationen, die mit einer entsprechenden Signalauswertung eines Messgeräts in vorteilhafter Weise auswertbar sind. Daher kann es durchaus sinnvoll sein, mit einer geringeren Anzahl von Antennenelementen zusenden, als zum Empfang des Messsignals verwendet werden. Erfindungsgemäß werden über eine Wegsensorik des Messgeräts die Messsignale des Messgeräts einer Position des Messgeräts zugeordnet.

Vorteilhaft ist ein System, das es ermöglicht, nacheinander zu senden und nacheinander zu empfangen, da in diesem Fall Querempfindlichkeiten und ein Übersprechen zwischen dem Sende- und Empfangselementen ausgeschlossen ist. Ein derartiges Verfahren hat allerdings auch den Nachteil, dass ein hoher Zeitbedarf, sowie hohe Kosten für das Messsystem gegeben sind, da Hochfrequenzschalter verwendet werden müssen, um zwischen der Sende- und Empfangsfunktion der Antennenelemente umzuschalten. Dem gegenüber ist gleichzeitiges Senden und Empfangen zeitsparend, günstig umsetzbar und mit nur wenig Datenmengen verbunden, enthält aber die Tendenz zu einem Übersprechen zwischen Sende- und Empfangskanälen.

Vorteilhafter Weise wird ein solches Sendesystem dadurch kalibrierungsfrei gehalten, dass man für jeden Messkanal, also beispielsweise bei einem zweiantennigen System horizontal und vertikal senderseitig einen Referenzpfad einbaut, der es ermöglicht, beispielsweise mit einem Umschalter das Messsignal direkt auf die Antennen durchzuschalten bzw. auf den Referenzpfad zu leiten. Auf diese Weise ist es möglich, Temperaturdriften und andere, veränderliche Signalanteile des Messsignals herauszurechnen, sodass Fehlmessungen oder häufige Benutzerkalibrierungen in kurzen Zeitintervallen vermieden werden können. Das erfindungsgemäße Messgerät bzw. das erfindungsgemäße Verfahren zur Ortung von in einem Medium eingeschlossenen Objekten mittels elektromagnetischer Hochfrequenzsignale ermöglicht es somit in vorteilhafter Weise durch eine geeignete Anordnung und Beschaltung einer Mehrzahl von Antennenelementen zu einer verbesserten Ortung, insbesondere zu einer besseren Trennung der Messsignale von eingeschlossenem Objekt und umgebenen Medium, zu gelangen.

Weitere Vorteile des erfindungsgemäßen Messgeräts bzw. des erfindungsgemäßen Verfahrens zur Ortung von in einem Medium eingeschlossenen Objekten ergeben sich aus der nachfolgenden Beschreibung einiger Ausführungsbeispiele.

Zeichnung

In der Zeichnung sind Ausführungsbeispiele für ein erfindungsgemäßes Messgerät bzw. das erfindungsgemäße Verfahren dargestellt, welche in der nachfolgenden Beschreibung näher erläutert werden sollen. Die Figuren der Zeichnung, deren Beschreibung sowie die Ansprüche enthalten zahlreiche Merkmale in Kombination. Ein Fachmann wird diese Merkmale auch einzeln betrachten und zu weiteren, sinnvollen Kombinationen zusammenfassen.

Es zeigen:

Figur 1 eine erfindungsgemäße Antennenanordnung für einen Hochfrequenzsensor eines Messgeräts,

Figur 2 einen Schnitt durch die Antennenanordnung gemäß Figur 1 in einer schematischen Darstellung,

Figur 3 ein Blockschaltbild zur Verdeutlichung des erfindungsgemäßen Verfahrens,

Figur 4 eine alternative Sensoranordnung für ein erfindungsgemäßes Messgerät in einer vereinfachten, schematisierten Darstellung,

Figur 5 ein erfindungsgemäßes Messgerät in einer perspektivischen Übersichtsdarstellung.

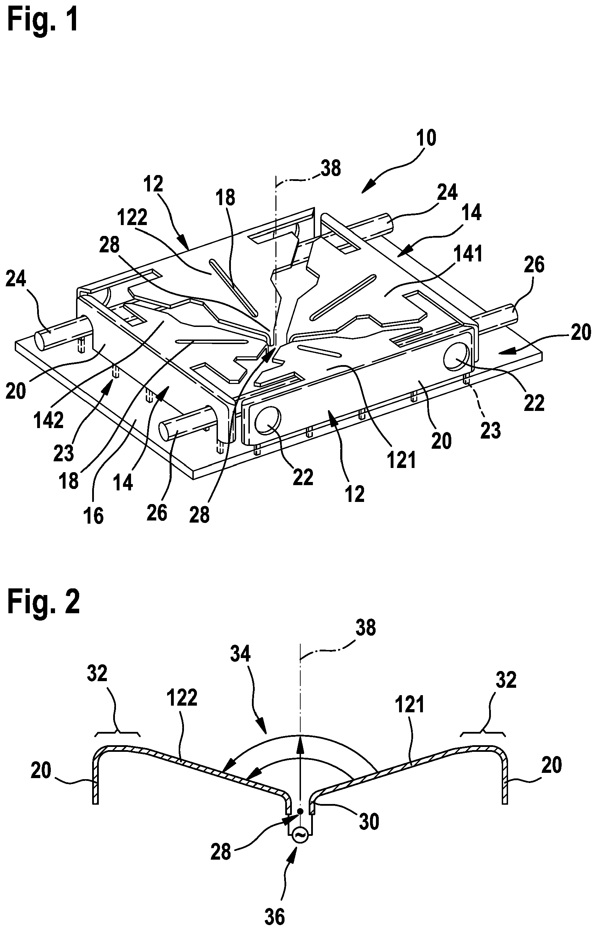

Figur 1 zeigt ein erstes Ausführungsbeispiel einer Antennenanordnung 10 für ein erfindungsgemäßes Messgerät. Die Antennenanordnung 10 gemäß Ausführungsbeispiel der Figur 1 umfasst zwei Antennenelemente 12 und 14, welche unter einem Winkel von 90° zueinander angeordnet sind. Die Antennenanordnung 10 ist auf einer Trägereinrichtung 16, beispielsweise einer Leiterplatte mechanisch fixiert sowie elektrisch mit dieser kontaktiert.

Die Antennenelemente 12 und 14 bestehen ihrerseits wiederum jeweils aus zwei voneinander getrennten, im wesentlichen Dreieck-förmigen Antennenabschnitten 121 und 122 (für das Antennenelement 12) bzw. 141 und 142 (für das Antennenelement 14). Dabei sind die Antennenabschnitte einer einzelnen Antenne sowohl voneinander als auch von den Antennenabschnitten des anderen Antennenelements getrennt. Die Einzelbleche 121, 122, 141, 142 der Antennenanordnung nach Figur 1 werden für sich über Fußpunkte 23 in die Trägereinrichtung 16 eingelötet, sodass erst mit dem Einbau aller vier Antennenabschnitte die Antennenanordnung gebildet ist. Zur Reduktion von Wirbelstromeffekten in den im Wesentlichen Dreieck-förmigen Antennenabschnitten sind gemäß Figur 1 Schlitze bzw. Ausnehmungen 18 vorgesehen, die vorzugsweise entlang der Spiegel- bzw. Symmetrieachse der Antennenabschnitte 10 verlaufen. Die im Wesentlichen Dreieck-förmigen Antennenabschnitte 121, 122, 141 und 142 gehen an den Außenseiten der ein Quadrat bildenden Antennenanordnung im Wesentlichen senkrecht zur Trägereinrichtung 16 verlaufende, elektrisch leitfähige Schirmwände 20 über.

In den Schirmwänden 20 der Antennenanordnung 10 sind darüber hinaus Ausnehmungen 22 vorgesehen, wobei in Querrichtung zwei Radachsen 24, 26 eingebracht sind. Diese Radachsen 24, 26 sowie die mit diesen Radachsen verbundenen Wälzkörper, die der Übersicht halber in Figur 1 nicht dargestellt sind, sind Teil eines Wegnehmersystems des erfindungsgemäßen Messgeräts, mit dessen Hilfe das Messgerät zum einen über eine zu untersuchende Oberfläche verfahren werden kann. Zum anderen ermöglicht dieses Wegnehmersystem die exakte Wegaufnahme, sodass für jedes detektierte Messsignal zudem auch die Ortsinformation an die entsprechende Auswerteeinheit des Messgeräts weitergeleitet werden kann.

Die im Bereich des Mittelpunkts 28 der Antennenanordnung liegenden Dreieckspitzen 30 sind mit - in Figur 1 nicht dargestellten - HF-Signalanschlüssen der Trägereinrichtung 16 kontaktiert. Dieser Mittelpunkt 28 der antennenanordnung bildet somit auch den Messpunkt der Anordnung.

Figur 2 zeigt zur Verdeutlichung einen schematischen Schnitt durch eine Spiegelachse des Antennenelements 12, bestehend aus den im Wesentlichen Dreieck-förmigen Antennenabschnitten 121 und 122 sowie den Schirmwänden 20. Zwischen den Schirmwänden 20 und den eigentlichen Antennenabschnitten 121, 122 befindet sich jeweils ein Übergangsabschnitt 32.

Durch die gebogenen Pfeile 34 ist in Figur 2 ein elektromagnetisches Wechselfeld schematisch dargestellt, welches von entsprechenden HF-Signalen gespeist wird. Entlang der Antennenachse 38 breiten sich die elektromagnetischen Wellen in einer Ebene, der Polarisationsebene, die in Figur 2 der Zeichenebene entspricht, aus. Die Wellen liegen dabei im Radarbereich mit einer Frequenz vorzugsweise zwischen 1 und 5 GHz aus. Die Bezeichnung HF-Signale oder Hochfrequenzsignale bziehr sich auf diesen Frequenzbereich.

Jeweils zwei diametral gegenüber liegende HF-Signalanschlüsse 30 können beispielsweise mit um etwa 180° zueinander phasenverschobenen HF-Signalen differenziell angeregt werden. Daraus resultiert ein Betrieb der Vorrichtung mit zwei unterschiedlichen, vorzugsweise um etwa 90° zueinander versetzten Polarisationsebenen. Die jeweils gegenüber liegenden Anschlüsse der zugeordneten Antennenabschnitte liegen geometrisch nah beieinander und weisen zur Antennenachse 38, vorzugsweise eine parallele Richtung auf. Die Schirmwand 20 eines Antennenabschnitts ist an ihrem unteren Ende im Bereich der Trägereinrichtung 16 flächig oder zumindest partiell mit einer Systemmasse, vorzugsweise einem Bezugspotential verbunden.

Zwischen den sich diametral gegenüber liegenden Antennenabschnitten 121 und 122 bzw. 141 und 142 bilden sich somit elektromagnetische Felder aus, die sich in bekannter Weise ablösen. Die Geometrie der Antennenanordnung ist derart gestaltet, dass sich ein ablösendes Feld im Quer- wie im Längsschnitt oberhalb der Antenneanordnung ohne Einbrüche ausbildet. Dabei sind direkt benachbarte Antennenabschnitte weitgehend voneinander entkoppelt.

In vorteilhafter Weise wird die Antennenanordnung gemäß Figur 1, welche über zwei um 90° zueinander verdrehte Antennenelemente 12 und 14 verfügt, derart angesteuert, dass die gespeisten bzw. ausgesendeten HF-Signale phasengleich sind. Neben dieser bevorzugten Ausführungsform, bei der die beiden Antennenelemente gleichphasig arbeiten, ist es prinzipiell auch möglich, die beiden Antennenelemente bzw. bei Verwendung von mehr als zwei Antennenelementen, diese mit einem Phasenunterschied von 90° oder beispielsweise auch 180° zueinander auszusenden.

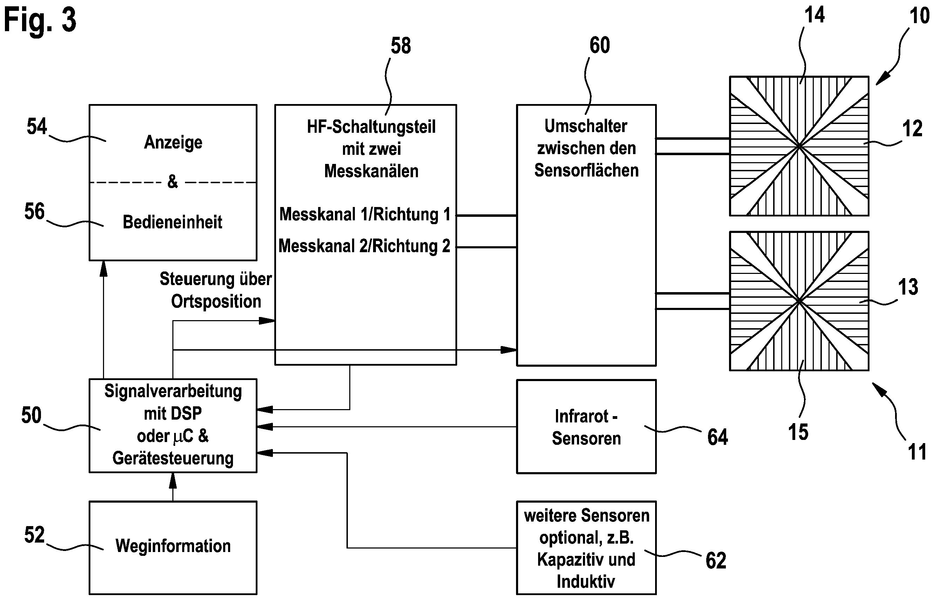

Im Folgenden soll das entsprechende Verfahren zur Ortung mittels elektromagnetischer HF-Signale, wie es in dem erfindungsgemäßen Messgerät zur Anwendung kommt, anhand von Figur 3 näher erläutert werden.

Figur 3 zeigt in einer schematisierten Blockdarstellung die wesentlichen Komponenten und deren Wechselwirkung eines erfindungsgemäßen Messgeräts.

Das Gerät besitzt eine zentrale Signalverarbeitung und Gerätesteuerung 50, die beispielsweise in einem DSP oder Mikrocomputer integriert sein kann. Diese Gerätesteuerung koordiniert und verarbeitet die Informationen des Weggebersystems 52, welches über die Radachsen. 24, 26 eine Bestimmung der Position des Messgeräts ermöglicht. Darüber hinaus steuert die Gerätesteuerung 50 auch eine Ausgabeeinheit des Messgeräts, welche beispielsweise durch eine Anzeige 54 in Form eines graphischen Displays im Gehäuse des Messgeräts realisiert sein kann. Des weiteren verarbeitet die zentrale Signalverarbeitung bzw. Gerätesteuerung 50 entsprechende Eingaben eines Nutzers, die mit Hilfe einer Bedieneinheit, welche am Messgerät ausgebildet ist, der Gerätesteuerung übermittelt werden kann. Mit Hilfe der Bedieneinheit 56 kann ein Nutzer des erfindungsgemäßen Messgeräts beispielsweise unterschiedliche Messprogramme starten.

Im Ausführungsbeispiel gemäß Figur 3 besitzt das erfindungsgemäße Messgerät zwei Antennenanordnungen 10 und 11, welche jeweils über zwei unter einem Winkel von 90° zueinander angeordneten Antennenelementen 12 und 14 (für Antennenanordnung 10) bzw. 13 und 15 (für Antennenanordnung 11) verfügen. Der Aufbau der Antennenanordnung 10 und 11 kann dem in Figur 1 erläuterten Aufbau entsprechen.

Das erfindungsgemäße Messgerät bzw. das entsprechende erfindungsgemäße Verfahren ist nicht beschränkt auf die Verwendung einer oder zweier Antennenanordnungen, sodass Figur 3 lediglich zur Beschreibung des zugrunde liegenden Prinzips dient. Das erfindungsgemäße Verfahren sowie ein entsprechendes Messgerät können prinzipiell mit einer beliebigen Anzahl von Antennenanordnungen realisiert werden. Darüber hinaus ist die jeweilige Antennenanordnung auch nicht beschränkt auf die Verwendung von lediglich zwei Antennenelementen in einer Antennenanordnung. Abweichend von dem in Figur 1 oder Figur 3 lediglich exemplarisch gezeigten Ausführungsbeispiel kann das erfindungsgemäße Messgerät bzw. das erfindungsgemäße Verfahren auch über Antennenanordnungen mit beliebig vielen Antennenelementen verfügen. Diese Antennenelemente sind dabei insbesondere um einen bestimmten Winkel α zueinander verdreht. Vorzugsweise ist dieser Winkel α derart gewählt, dass bei einer Anzahl von n Antennenelementen der Winkel α zwischen den Antennenelementen, d.h. zwischen der Symmetrieachse dieser Antennenelemente gegeben ist durch

$$\alpha = \frac{180°}{n}.$$

So würden beispielsweise bei der Verwendung von drei Antennenelementen in einer Antennenanordnung die Antennenelemente jeweils um einen Winkel von 30° gegeneinander verdreht sein. Auch ist das erfindungsgemäße Messgerät bzw. das erfindungsgemäße Verfahren nicht beschränkt auf die Verwendung von im Wesentlichen Dreieck-förmigen Antennenabschnitten. Die Antennenelemente können beispielsweise auch als einstückige, beispielsweise rechteckige Planarantennen ausgebildet sein.

Im Folgenden wird ein Ausführungsbeispiel mit zwei Antenneanordnungen, mit jeweils zwei Antennenelementen beispielhaft näher erläutert. Die Antennenelemente 12 und 14 bzw. 13 und 15 gemäß Ausführungsbeispiel der Figur 3 sind dabei so angeordnet, dass die Strahlung in unterschiedlichen Ebenen (vertikal, horizontal) verläuft, sodass ein HF-Signal mit anisotropen, d.h. länglichen Objekten unterschiedliche stark wechselwirkt. Das Signal, welches dabei verwendet wird und welches typischer Weise in einem Frequenzbereich von 1 bis 5 GHz liegt, kann ein gepulstes Signal oder aber auch ein FMCW (Frequency Modulated Continious Wave) Signal sein. Darüber hinaus kann auch ein Pseudo-Noise-Signal Verwendung finden. Prinzipiell kann bei dem erfindungsgemäßen Verfahren jede Art der Ausstrahlung von Mikrowellen verwendet werden.

Die zentrale Gerätesteuerung 50 des erfindungsgemäßen Messgeräts gemäß Ausführungsbeispiel der Figur 3 steuert ein HF-Schaltungsteil 58, welches entsprechend der Anzahl der verwendeten Antennenelemente über mehrere Messkanäle verfügt. Im Ausführungsbeispiel der Figur 3 besitzt das HF-Schaltungsteil somit zwei Messkanäle für die Antennenelemente 12, 14 bzw. 13, 15. Die erzeugte HF-Signale werden über die Messkanäle auf die Antennenelemente gegeben, sodass wie im Zusammenhang mit Figur 2 beschrieben, eine hochfrequente elektromagnetische Welle von der jeweiligen Antennenanordnung in einer Ebene ausgesendet wird.

Bei Verwendung mehrerer Antennenanordnungen, wie dies im Ausführungsbeispiel der Figur 3 gegeben ist, kann zwischen dem HF-Schaltungsteil 58 und den Antennenanordnungen (im Ausführungsbeispiel 10, 11) ein Umschalter 60 vorgesehen sein, der das hochfrequente Messsignal wahlweise oder gleichzeitig auf die verschiedenen Antennenanordnungen 10 bzw. 11 gibt.

Um den Aufwand zweier Hochfrequenzsignalerzeugungen zu vermeiden kann auch im HF-Schaltungsteil 58 oder diesem vorgelagert lediglich ein HF-Signal erzeugt werden, welches dann mit entsprechender Phasenlage auf die beiden (oder mehrere) Messkanäle der jeweiligen Antennenanordnung 10 bzw. 11 eingespeist werden kann. Bei der Aufteilung auf zwei Richtungen bzw. zwei Antennenelemente kann das HF-Sendesignal in der notwendigen Leistung aufgeteilt werden. Im Standardfall werden die Leistungen im Verhältnis von Eingangsleistung zu Anzahl der Aufteilungen geteilt. Eine andere Aufteilung ist ebenfalls möglich. Die auf die Antennenelemente eingespeisten HF-Signale können dabei beispielsweise gleichphasig oder auch mit einem Phasenunterschied versehen sein. So ist es beispielsweise möglich, die Teilsignale, welche auf die Antennenelemente einer Antennenanordnung gegeben werden, mit einer Phasendifferenz von 90° bzw. 180° zu versehen.

Für die Aussendung bzw. den Empfang der HF-Signale bei Verwendung von zwei (oder auch drei, vier, usw.) Antennenelementen in einer Antennenanordnung ergeben sich in vorteilhafter Weise folgende Möglichkeiten:

Das HF-Signal zur Ortung von eingeschlossenen Objekten kann in beiden Richtungen (Antennenelemente 12 und 14) gleichzeitig gesendet werden. Alternativer Weise ist ein Senden in beiden Richtungen auch seriell, d.h. nacheinander möglich. Darüber hinaus ist es auch möglich, grundsätzlich nur in einer Richtung, beispielsweise vertikal zu senden, unabhängig von der Anzahl der Antennenelemente in einer Antennenanordnung. Wie bereits ausgeführt, kann dabei die Speisung der Antennen, wenn man in beide Richtungen abstrahlt, unterschiedlich sein. So kann das Senden auf beiden Richtungen, d.h. mit beiden Antennenelementen phasengleich erfolgen. Ebenso ist es möglich, die abgestrahlten HF-Signale der beiden Antennenelemente mit einem Phasenunterschied von 90° oder auch 180° zu versehen.

Der Empfang des an einem Medium reflektierten bzw. am im Medium eingeschlossenen Objekt reflektierten HF-Signals kann in analoger Weise in unterschiedlichen Konfigurationen für die Antennenanordnung erfolgen. So kann beispielsweise der Empfang des reflektierten Signals in beiden Richtungen und gleichzeitig erfolgen. Alternativer Weise kann der Empfang des reflektierten Messsignals in beiden Richtungen, jedoch nacheinander erfolgen. Auch ist es möglich, lediglich ein Antennenelement einer Antennenanordnung zum Senden, jedoch mehrere Antennenelemente für den Empfang zu nutzen.

So ist es durchaus sinnvoll, nur in einer Richtung, d.h. auf einen Messkanal (12 oder 14 bzw. 13 oder 15) zu senden und in beiden Richtungen (12 und 14 bzw. 13 und 15) zu empfangen, da ein zu ortendes Objekt selbst bzw. das umgebende Medium, wie beispielsweise eine Wand die Phasenlage des Messsignals drehen kann. So erzeugen beispielsweise metallische Objekte einen Phasensprung, sodass über unterschiedliche Sende- bzw. Empfangskonfigurationen Zusatzinformationen auch über Objekteigenschaften, beispielsweise Metall/ Nicht-Metall Unterscheidungen getroffen werden können, indem beispielsweise die Signalauswertung sowohl lediglich mit einem Empfangskanal als auch zusätzlich mit beiden Empfangskanälen durch geführt werden kann.

Vorteilhaft ist es im Prinzip, wenn man nacheinander sendet und nacheinander empfängt, da somit Querempfindlichkeiten und ein Übersprechen weitgehend ausgeschlossen sind. Ein Nachteil dieses Verfahrens ist es jedoch, dass ein hohe Zeitbedarf und zudem hohe Kosten für das System entstehen, da HF-Schalter verwendet werden müssen und hohe Datenmengen anfallen, die transferiert und verarbeitet werden müssen. Dem gegenüber ist ein gleichzeitiges Senden und Empfangen zeitsparend, günstiger umsetzbar und mit weniger Daten verbunden, enthält aber die Gefahr der schlechteren Signalqualität durch ein Übersprechen zwischen den Messkanälen.

Einen sinnvoller Kompromiss scheint ein System darzustellen, das gleichzeitig sendet aber nacheinander empfängt, da dieses lediglich senderseitig einer Signalaufteilung bedarf und auf der Empfangsseite nur einen Empfänger (beispielsweise ein Sampler mit AD-Wandler) benötigt, darüber hinaus jedoch kein Schalter notwendig ist.

Durch die zwei Messorte sowie die zwei Messrichtungen der Hochfrequenzsensorik ist eine Aussage über die Lage und den Verlauf des eingeschlossenen Objekts in dem Medium, beispielsweise einer Wand, möglich. Durch die gemessenen zwei Raumrichtungen der Antennenanordnung entsprechende der beiden Polarisationsrichtungen des Messsignals kann für jeden Messort ein Untergrundabzug direkt erfolgen, sodass beispielsweise eine bessere Detektion von Kunststoffrohren in Baumaterialien möglich wird. Auf diese Weise ist es möglich, den Einfluss der Struktur des umgebenden Mediums, wie beispielsweise einer Wand, einer Decke oder eines Bodens zu reduzieren und somit auch Objekte, wie beispielsweise Kunststoffrohre, die lediglich ein schwaches Signal erzeugen, zu detektieren.

Vorteilhafter Weise wird das erfindungsgemäße Sendesystem dadurch möglichst kalibrierungsfrei gehalten, dass man für jeden Messkanal (im Ausführungsbeispiel der Figur 3 beispielsweise horizontal und vertikal) senderseitig einen Referenzpfad einbaut, der es ermöglicht über einen Umschalter das HF-Signal auf eine Referenz, beispielsweise einen definierten Abschlusswiderstand oder direkt auf das entsprechende Antennenelement durchzuschalten. Auf diese Weise können Temperaturdriften oder andere, veränderliche Signalanteile über die Signalverarbeitung herausgerechnet werden. Dies fordert zumeist die Notwendigkeit einer Werks- oder Benutzerkalibrierung, vermeidet aber Fehlmessungen.

Neben den zuvor beschriebenen Antennenanordnungen kann das erfindungsgemäße Messgerät über weitere Sensoren verfügen, die die Ortung von in einem Medium eingeschlossenen Objekten erleichtern. So können beispielsweise weitere induktive oder auch kapazitive Sensoren vorhanden sein, die im Blockschaltbild gemäß Figur 3 zusammenfassend mit dem Bezugszeichen 62 versehen sind. So können induktive bzw. kapazitive Sensoren dazu beitragen, neben der reinen Ortung eines eingeschlossenen Objekts auch eine Identifizierung des Objektmaterials zu erleichtern. Insbesondere vorteilhaft ist dabei die Verwendung von Infrarotsensoren 64, da diese die Identifikation von Wärmequellen ermöglichen. Insbesondere im Zusammenhang mit der Detektion der genauen Lage von Fußboden-, Wand- oder Deckenheizungen ist es vorteilhaft, das erfindungsgemäße Messgerät mit einem zusätzlichen Infrarotsensor auszustatten. Durch den Einsatz aller im Gerät vorhandenen Sensoren kann die Detektion der Heizungsrohre selbst in einer sehr schwer detektierbaren Umgebung gewährleistet werden. Dadurch wird die Sicherheit des Anwenders, was eine Beschädigung der Rohre angeht, verbessert. So ist es beispielsweise auch möglich, durch die Verwendung der Infrarotsensorik eine Aussage über die Wärmeverteilung im Boden, beispielsweise die Flussrichtung der Heizung bzw. eine entsprechende Leckage zu detektieren.

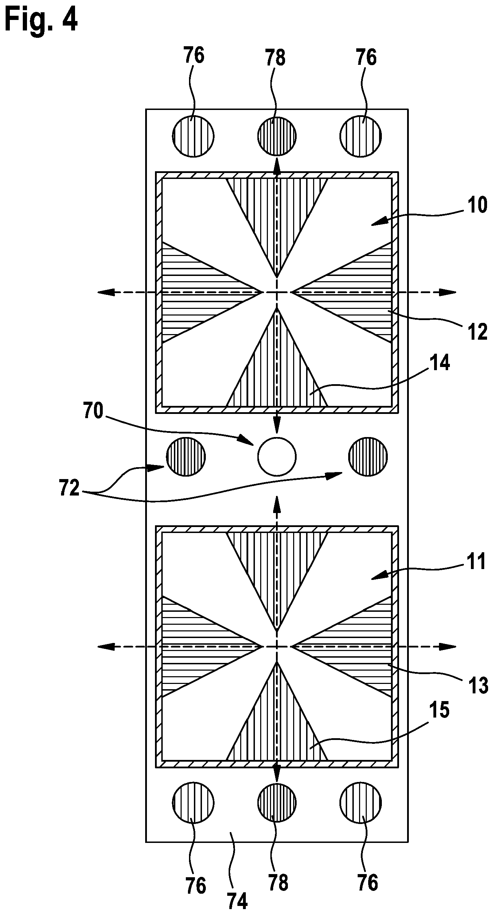

Figur 4 zeigt in einer schematischen Darstellung eine mögliche Sensoranordnung für ein erfindungsgemäßes Messgerät. Der Sensor verfügt über zwei Antennenanordnungen 10 und 11 mit jeweils zwei Antennenelementen 12 und 14 bzw. 13 und 15. Zwischen den beiden Antennenanordnungen 10 bzw. 11 ist eine Infrarotsensorik angeordnet, die beispielsweise über einen ersten Infrarotsensor 70 die Wärmebestimmung eines Objekts erlaubt. Durch eine zusätzliche, räumlich getrennte Infrarotsensorik 72, die beispielsweise zwei weitere Infrarotsensoren umfasst, die gegebenenfalls differenziell ausgewertet werden können, ist zudem eine Bestimmung der Wärmeverteilung möglich. Neben der HF-Sensorik 10 bzw. 11 sowie der Infrarotsensorik 70 bzw. 72 verfügt der Sensor 74 gemäß Ausführungsbeispiel der Figur 4 zusätzlich noch über eine Spulenanordnung 76 einer induktiven Sensorik sowie über einen kapazitiven Sensor 78.

Das erfindungsgemäße Messgerät bzw. das erfindungsgemäße Verfahren zur Ortung von in einem Medium eingeschlossenen Objekten mittels elektromagnetischer HF-Signale ermöglicht somit eine vorteilhafte Anordnung der Sensoren bzw. eine entsprechende Beschaltung dieser, insbesondere eine bessere Trennung der Signale von Wandstruktur bzw. Wandaufbau und eingeschlossenem Objekt zu erzielen. So ist es insbesondere möglich, durch die Verwendung von mehreren Antennenelementen, die gegeneinander gedreht sind, die Lage und den Verlauf von Objekten besser zu erfassen.

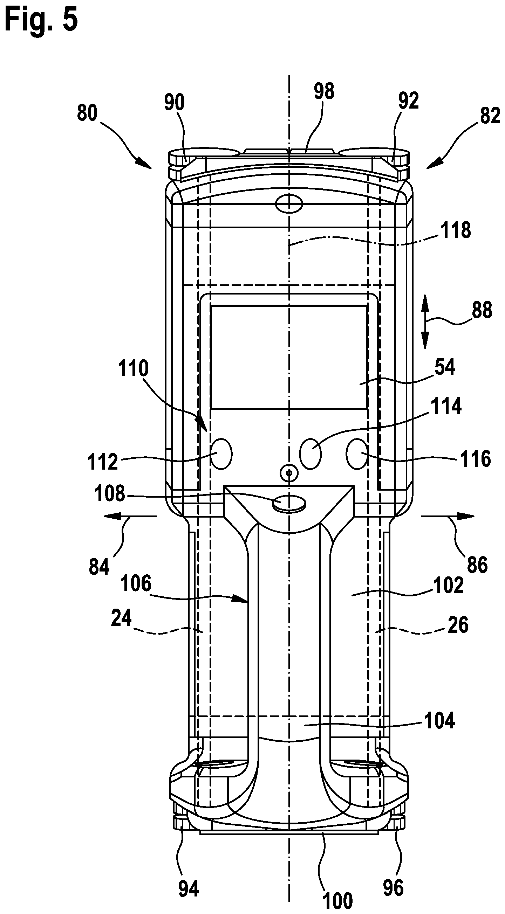

Figur 5 zeigt in einer Übersichtsdarstellung ein Ausführungsbeispiel eines erfindungsgemäßes Messgerät. Figur 5 zeigt ein handgehaltenes Messgerät 80 zur Detektion von in einem Medium eingeschlossenen Objekten mit einer Mehrfachsensorik.

Das Gehäuse 82 dieses Messgeräts 80 ist in zwei bevorzugte, entgegen gesetzte Bewegungsrichtungen 84 bzw. 86 verfahrbar, die senkrecht zu einer Längserstreckung 88 des Gehäuses 82 des Messgerätes verlaufen. Das Messgerät 80 besitzt vier als Räder ausgebildete Wälzkörper 90, 92, 94 und 96, die in Längserstreckung 88 des Gerätes an gegenüber liegenden Stirnseiten 98 bzw. 100, in Quererstreckung des Gerätes in dessen äußerem Bereich angeordnet sind. Die sich jeweils in Längserstreckung 88 gegenüber liegenden Wälzkörper 90 und 94 bzw. 92 und 96 sind über starre Achsen 24 bzw. 26 (vgl. Figur 1) drehfest miteinander verbunden, wobei die starren Achsen 24 bzw. 26 derart durch die Antennenanordnung geführt ist, dass diese mit ihrer Halterung als Achsenführung für das verfahrbare Gerät 80 dient.

Zur Aufnahme von Bewegungskenngrößen weist das Messgerät 80 eine Sensoreinheit mit insbesondere zwei Sensoren auf, mit denen die Bewegungskenngrößen erfassbar sind. Dazu sind auf die Achsen 24 bzw. 26 in nicht näher dargestellter Weise Segmenträder aufgesteckt, die sich in Gabellichtschranken bewegen, so dass die Bewegungsrichtung des Gerätes detektiert werden kann.

Das Gehäuse 82 des Messgeräts 80 weist an seiner Deckseite 102 eine von einem bügelförmigen Griff 104 gebildete Halteeinrichtung 106 auf. Die Halteeinrichtung 106 verläuft in Längserstreckung 88 des Gehäuses 82. Mit Hilfe dieser Halteeinrichtung 106 und der Räder 90, 92, 94 und 96 kann das Messgerät über die Oberfläche eines zu untersuchenden Mediums, beispielsweise einer Wand, eines Bodens oder einer Decke verfahren werden.

An seinem einen, einem graphischen Display 54 zugewendetem Ende weist die Halteeinrichtung 106 ein erstes Bedienelement 108 auf, mit dem ein entsprechender Messvorgang zur Ortung eines eingeschlossenen Objektes gestartet bzw. beendet werden kann. Zwischen der Halteeinrichtung 106 und dem als graphischen Display 54 ausgebildeten Bildschirm des Geräts ist ein Tastenfeld 110 angeordnet, welches über verschiedene Messtasten 112, 114, 116 verfügt, mit denen beispielsweise unterschiedliche Sensoren der Mehrfachsensorik des Messgeräts hinzu- bzw. abgeschaltet werden können.

Die erfindungsgemäße Antennenanordnung 10 bzw. 10 und 11 ist in dem dem Halteelement 106 abgewandten Kopfteil 118 des Messgeräts angeordnet und in Figur 5 nur schematisch gestrichelt wiedergegeben. Dabei sind die Antennenelemente 12 und 14 bzw. 12, 13, 14 und 15 des Hochfrequenzsensors auf die in Figur 5 verdeckte Unterseite des Gehäuses 82 ausgerichtet

Das erfindungsgemäße Messgerät, insbesondere ein solches handgehaltenes Messgerät zur Detektion von in einem Medium eingeschlossenen Objekten, weist eine Mehrfachsensorik, insbesondere eine Hochfrequenzsensorik, beispielsweise mehrere Radarantennen in einem Frequenzbereich zwischen ca. 1 und 5 GHz auf. Darüber hinaus besitzt das erfindungsgemäße Messgerät einen induktiven Sensor zu Ortung metallischer Gegenstände. Die Hochfrequenzantennen sowie die Spulenanordnungen eines induktiven Sensors werden von einer mechanischen Trägereinrichtung relativ zueinander und zudem auch insgesamt als Multisensoreinheit im Gehäuse des Messgeräts positioniert. Dabei kann die mechanische Trägereinrichtung direkt auf einer Trägerplatine des Messgerätes befestigt werden, die weitere elektronische Ansteuerelemente zum Betrieb des Messgeräts aufweist. Weitere Sensorik, wie beispielsweise kapazitive Sensoren, Netzspannungsdetektoren, die kapazitiv und passiv, d. h. ohne Erzeugung eines elektrischen Felds, das Wechselspannungsfeld einer Netzspannungsleitung erfassen können, sowie auch ein oder mehrere kapazitive Hochfrequenzdetektoren können an entsprechenden Aufnahmen einer mechanischen Trägereinrichtung bzw. einer zugeordneten Trägerplatine 16 derart angeordnet werden, dass jeder Sensor dieser Mehrfachsensorik den gleichen Messort besitzt, was zu einer genaueren Aussage über das aufgefundene, detektierte Objekt führt.

**Patentansprüche**

1. Handgehaltenes Messgerät zur Ortung von in einem Medium eingeschlossenen Objekten mittels elektromagnetischer HF-Signale im Bereich von 1 bis 5 GHz, mit einem Gehäuse (82) und zumindest einem in diesem Gehäuse (82) angeordneten Hochfrequenzsensor mit einer ersten Antennenanordnung (10), welche zumindest ein erstes Antennenelement (12) aufweist, das in einer ersten Polarisationsebene abstrahlt und/oder empfängt, wobei die Antennenanordnung (10) über zumindest ein weiteres Antennenelement (14) verfügt, dessen Polarisationsebene gegenüber der Polarisationsebene des ersten Antennenelementes (12) gedreht ist, **dadurch gekennzeichnet, dass** das Messgerät (80) eine Wegsensorik (24,26,52) aufweist, über die die Messsignale des Messgeräts (80) einer Position des Messgeräts (80) zugeordnet werden.

2. Handgehaltenes Messgerät nach Anspruch 1, **dadurch gekennzeichnet, dass** das Messgerät (80) eine erste Mehrzahl n von Antennenelementen (12,14) besitzt, deren Polarisationsebenen zueinander gedreht sind.

3. Handgehaltenes Messgerät nach Anspruch 2, **dadurch gekennzeichnet, dass** die Polarisationsebenen jeweils um einen Winkel α zueinander gedreht sind.

4. Handgehaltenes Messgerät nach Anspruch 3, **dadurch gekennzeichnet, dass** α =180°/n gilt.

5. Handgehaltenes Messgerät nach zumindest einem der Ansprüche 1 bis 4, **dadurch gekennzeichnet, dass** jedes Antennenelement (12,14) aus zumindest zwei, symmetrisch um einen Messpunkt (28) angeordnete, elektrisch leitfähigen Antennenabschnitten (121,122,141,142) besteht, die jeweils diametral zueinander angeordnet sind.

6. Handgehaltenes Messgerät nach einem der vorhergehenden Ansprüche, **dadurch gekennzeichnet, dass** Schaltmittel (58) oder Signalteilungsmittel (58) vorhanden sind, die es ermöglichen, ein Sendesignal auf mehrere Antennenelemente (12,14) aufzuteilen.

7. Handgehaltenes Messgerät nach einem der vorhergehenden Ansprüche, **dadurch gekennzeichnet, dass** Schaltmittel (58) oder Signalteilungsmittel (58) vorhanden sind, die es ermöglichen, die Antennenelemente (12,14) einer Antennenanordnung (10) gleichphasig anzusteuern.

8. Handgehaltenes Messgerät nach einem der vorhergehenden Ansprüche bis 6, **dadurch gekennzeichnet, dass** Schaltmittel (58) oder Signalteilungsmittel (58) vorhanden sind, die es ermöglichen, die Antennenelemente (12,14) einer Antennenanordnung (10) mit einer beliebigen, definierten Phasendifferenz anzusteuern.

9. Handgehaltenes Messgerät nach einem der vorhergehenden Ansprüche, **dadurch gekennzeichnet, dass** im Gehäuse (82) des Gerätes (80) eine zweite Antennenanordnung (11) mit einer zweiten Mehrzahl m von Antennenelementen (13,15) angeordnet ist.

10. Handgehaltenes Messgerät nach Anspruch 2 und 9, **dadurch gekennzeichnet, dass** m = n gilt.

11. Handgehaltenes Messgerät nach einem der vorhergehenden Ansprüche 9 oder 10, **dadurch gekennzeichnet, dass** ein HF-Schaltungsteil (58) vorgesehen ist, das beide Antennenanordnungen (10,11) ansteuert, indem das Signal dieses HF-Schaltungsteils (58) mittels eines Umschalters (60) alternativ oder durch ein Signalteilungsmittel gleichzeitig auf die Antennenanordnungen (10,11) geleitet wird.

12. Handgehaltenes Messgerät nach einem der vorhergehenden Ansprüche 7 bis 11, **dadurch gekennzeichnet, dass** das HF-Schaltungsteil (58) über eine Mehrzahl von Messkanälen verfügt, wobei die Anzahl der Messkanäle gleich der Anzahl der Antennenelemente (12,14; 11,13) einer Antennenanordnung (10, 11) ist.

13. Handgehaltenes Messgerät nach einem der vorhergehenden Ansprüche, **dadurch gekennzeichnet, dass** zumindest ein zusätzlicher Infrarotsensor (64, 70,72) am oder im Gehäuse (82) des Messgerätes (80) angeordnet ist.

14. Handgehaltenes Messgerät nach einem der vorhergehenden Ansprüche, **dadurch gekennzeichnet, dass** das Messgerät über Schaltmittel verfügt, die es ermöglichen, dass HF-Signal einem Referenznetzwerk zuzuführen.

15. Verfahren zum Betrieb eines handgehaltenen Messgerätes (80) mit einer Mehrzahl von Antennenelementen (12,14;11,13), wobei das Senden und/oder Empfangen des Messsignals in unterschiedlichen Polarisationsebenen durchgeführt werden kann, **dadurch gekennzeichnet, dass** über eine Wegsensorik (24,26,52) des Messgeräts (80) die Messsignale des Messgeräts (80) einer Position des Messgeräts (80) zugeordnet werden.

16. Verfahren nach Anspruch 15, **dadurch gekennzeichnet, dass** das Senden und / oder Empfangen des Messsignals mit einer unterschiedlichen Anzahl von Antennenelementen (12,14;13,15) durchgeführt werden kann.

17. Verfahren nach Anspruch 15 oder 16, **dadurch gekennzeichnet, dass** mit einer geringeren Anzahl von Antennenelementen empfangen als gesendet wird.

18. Verfahren nach Anspruch 15 oder 16, **dadurch gekennzeichnet, dass** mit einer geringeren Anzahl von Antennenelementen gesendet als empfangen wird.

19. Verfahren nach Anspruch 15 oder 16, **dadurch gekennzeichnet, dass** mit zumindest zwei Antennenelementen nacheinander sowohl gesendet als auch empfangen wird.

20. Verfahren nach Anspruch 15 oder 16, **dadurch gekennzeichnet, dass** mit zumindest zwei Antennenelementen gleichzeitig sowohl gesendet als auch empfangen wird.

21. Verfahren nach Anspruch 15 oder 16, **dadurch gekennzeichnet, dass** zumindest zwei Antennenelemente (12,14;13,15) sowohl als Sender, als auch als Empfänger fungieren können, wobei die Polarisationsebenen der mindestens zwei Antennenelemente (12, 14; 13, 15) gegeneinander gedreht sind.

## Claims

1. Handheld measuring device for locating objects enclosed in a medium using electromagnetic RF signals in the range of 1 to 5 GHz, having a housing (82) and at least one radio-frequency sensor which is arranged in this housing (82) and has a first antenna arrangement (10) having at least one first antenna element (12) which emits and/or receives in a first polarization plane, wherein the antenna arrangement (10) has at least one further antenna element (14), the polarization plane of which is rotated with respect to the polarization plane of the first antenna element (12), **characterized in that** the measuring device (80) has a travel sensor system (24, 26, 52) which is used to assign the measurement signals from the measuring device (80) to a position of the measuring device (80).

2. Handheld measuring device according to Claim 1, **characterized in that** the measuring device (80) has a first plurality n of antenna elements (12, 14), the polarization planes of which are rotated with respect to one another.

3. Handheld measuring device according to Claim 2, **characterized in that** the polarization planes are each rotated through an angle $\alpha$ with respect to one another.

4. Handheld measuring device according to Claim 3, **characterized in that** $\alpha=180°/n$.

5. Handheld measuring device according to at least one of Claims 1 to 4, **characterized in that** each antenna element (12, 14) comprises at least two electrically conductive antenna sections (121, 122, 141, 142) which are arranged symmetrically around a measuring point (28) and are each arranged diametrically with respect to one another.

6. Handheld measuring device according to one of the preceding claims, **characterized in that** there are switching means (58) or signal splitting means (58) which make it possible to divide a transmission signal among a plurality of antenna elements (12, 14).

7. Handheld measuring device according to one of the preceding claims, **characterized in that** there are switching means (58) or signal splitting means (58) which make it possible to control the antenna elements (12, 14) in an antenna arrangement (10) in phase.

8. Handheld measuring device according to one of the preceding Claims to 6, **characterized in that** there are switching means (58) or signal splitting means (58) which make it possible to control the antenna elements (12, 14) in an antenna arrangement (10) with any desired defined phase difference.

9. Handheld measuring device according to one of the preceding claims, **characterized in that** a second antenna arrangement (11) having a second plurality m of antenna elements (13, 15) is arranged in the housing (82) of the device (80).

10. Handheld measuring device according to Claims 2 and 9, **characterized in that** m=n.

11. Handheld measuring device according to either of the preceding Claims 9 and 10, **characterized in that** an RF circuit part (58) is provided and controls both antenna arrangements (10, 11) by virtue of the signal from this RF circuit part (58) being alternatively passed to the antenna arrangements (10, 11) by means of a changeover switch (60) or being simultaneously passed to the antenna arrangements (10, 11) by means of a signal splitting means.

12. Handheld measuring device according to one of the preceding Claims 7 to 11, **characterized in that** the RF circuit part (58) has a plurality of measuring channels, wherein the number of measuring channels is equal to the number of antenna elements (12, 14; 11, 13) in an antenna arrangement (10, 11).

13. Handheld measuring device according to one of the preceding claims, **characterized in that** at least one additional infrared sensor (64, 70, 72) is arranged on or in the housing (82) of the measuring device (80).

14. Handheld measuring device according to one of the preceding claims, **characterized in that** the measuring device has switching means which make it possible to supply the RF signal to a reference network.

15. Method for operating a handheld measuring device (80) having a plurality of antenna elements (12, 14; 11, 13), wherein the measurement signal can be transmitted and/or received in different polarization planes, **characterized in that** a travel sensor system (24, 26, 52) of the measuring device (80) is used to assign the measurement signals from the measuring device (80) to a position of the measuring device (80).

16. Method according to Claim 15, **characterized in that** the measurement signal can be transmitted and/or received using a different number of antenna elements (12, 14; 13, 15).

**17.** Method according to Claim 15 or 16, **characterized in that** reception is carried out using a smaller number of antenna elements than transmission.

**18.** Method according to Claim 15 or 16, **characterized in that** transmission is carried out using a smaller number of antenna elements than reception.

**19.** Method according to Claim 15 or 16, **characterized in that** both transmission and reception are carried out in succession using at least two antenna elements.

**20.** Method according to Claim 15 or 16, **characterized in that** both transmission and reception are carried out at the same time using at least two antenna elements.

**21.** Method according to Claim 15 or 16, **characterized in that** at least two antenna elements (12, 14; 13, 15) can act both as transmitters and as receivers, wherein the polarization planes of the at least two antenna elements (12, 14; 13, 15) are rotated with respect to one another.

**Revendications**

**1.** Appareil de mesure tenu à la main pour la localisation d'objets contenus dans un milieu à l'aide de signaux HF électromagnétiques dans la plage de 1 à 5 GHz, comportant un boîtier (82) et au moins un capteur à haute fréquence disposé dans ledit boîtier (82), et pourvu d'un premier système d'antenne (10) comportant au moins un premier élément d'antenne (12) qui rayonne et/ou reçoit dans un premier plan de polarisation, dans lequel le système d'antenne (10) comporte au moins un autre élément d'antenne (14) dont le plan de polarisation est tourné par rapport au plan de polarisation du premier élément d'antenne (12), **caractérisé en ce que** l'appareil de mesure (80) comporte des capteurs de déplacement (24, 26, 52) au moyen desquels les signaux de mesure de l'appareil de mesure (80) sont associés à une position de l'appareil de mesure (80).

**2.** Appareil de mesure tenu à la main selon la revendication 1, **caractérisé en ce que** l'appareil de mesure (80) possède une pluralité n d'éléments d'antenne (12, 14) dont les plans de polarisation sont tournés les uns par rapport aux autres.

**3.** Appareil de mesure tenu à la main selon la revendication 2, **caractérisé en ce que** les plans de polarisation sont respectivement tournés d'un angle $\alpha$

les uns par rapport aux autres.

**4.** Appareil de mesure tenu à la main selon la revendication 3, **caractérisé en ce que** $\alpha = 180°/n$.

**5.** Appareil de mesure tenu à la main selon au moins l'une des revendications 1 à 4, caractérisé en ce chaque élément d'antenne (12, 14) est constitué d'au moins deux parties d'antenne (121, 122, 141, 142) électriquement conductrices disposées symétriquement autour d'un point de mesure (28), qui sont respectivement disposées diamétralement les unes par rapport aux autres.

**6.** Appareil de mesure tenu à la main selon l'une des revendications précédentes, **caractérisé en ce qu'**il est prévu des moyens de commutation (58) ou des moyens de répartition de signaux (58) permettant de répartir un signal d'émission entre plusieurs éléments d'antenne (12, 14).

**7.** Appareil de mesure tenu à la main selon l'une des revendications précédentes, **caractérisé en ce qu'**il est prévu des moyens de commutation (58) ou des moyens de répartition de signaux (58) permettant de commander les éléments d'antenne (12, 14) d'un système d'antenne (10) de manière à ce qu'ils soient en phase.

**8.** Appareil de mesure tenu à la main selon l'une des revendications à 6 précédentes, **caractérisé en ce qu'**il est prévu des moyens de commutation (58) ou des moyens de répartition de signaux (58) permettant de commander les éléments d'antenne (12, 14) d'un système d'antenne (10) avec un déphasage quelconque défini.

**9.** Appareil de mesure tenu à la main selon l'une des revendications précédentes, **caractérisé en ce qu'**un deuxième système d'antenne (11) comportant une deuxième pluralité m d'éléments d'antenne (13, 15) est disposé dans le boîtier (82) de l'appareil (80).

**10.** Appareil de mesure tenu à la main selon les revendications 2 et 9, **caractérisé en ce que** m = n.

**11.** Appareil de mesure tenu à la main selon l'une des revendications 9 ou 10 précédentes, **caractérisé en ce qu'**il est prévu une partie de circuit HF (58) qui commande les deux systèmes d'antenne (10, 11) en acheminant en alternance ou simultanément au moyen d'un commutateur (60) le signal de ladite partie de circuit HF (58) par l'intermédiaire d'un moyen de répartition de signaux vers les systèmes d'antenne (10, 11).

**12.** Appareil de mesure tenu à la main selon l'une des revendications 7 à 11 précédentes, **caractérisé en**

**ce que** la partie de circuit HF (58) comporte une pluralité de canaux de mesure, dans lequel le nombre des canaux de mesure est égal au nombre des éléments d'antenne (12, 14 ; 11, 13) d'un système d'antenne (10, 11) .

**13.** Appareil de mesure tenu à la main selon l'une des revendications précédentes, **caractérisé en ce qu'**au moins un capteur infrarouge (64, 70, 72) supplémentaire est disposé sur ou dans le boîtier (82) de l'appareil de mesure (80).

**14.** Appareil de mesure tenu à la main selon l'une des revendications précédentes, **caractérisé en ce que** l'appareil de mesure comporte des moyens de commutation qui permettent d'acheminer le signal HF vers un réseau de référence.

**15.** Procédé de fonctionnement d'un appareil de mesure tenu à la main (80) comportant une pluralité d'éléments d'antenne (12, 14 ; 11, 13), dans lequel l'émission et/ou la réception du signal de mesure peut/peuvent être effectuée(s) dans des plans de polarisation différents, **caractérisé en ce que** les signaux de mesure de l'appareil de mesure (80) sont associés à une position de l'appareil de mesure (80) au moyen de capteurs de déplacement (24, 26, 52) de l'appareil de mesure (80).

**16.** Procédé selon la revendication 15, **caractérisé en ce que** l'émission et/ou la réception du signal de mesure peut/peuvent être effectuée(s) par un nombre différent d'éléments d'antenne (12, 14 ; 13, 15) .

**17.** Procédé selon la revendication 15 ou 16, **caractérisé en ce que** la réception est effectuée avec un plus petit nombre d'éléments d'antenne que l'émission.

**18.** Procédé selon la revendication 15 ou 16, **caractérisé en ce que** la réception est effectuée avec un plus petit nombre d'éléments d'antenne que la réception.

**19.** Procédé selon la revendication 15 ou 16, **caractérisé en ce que** l'émission et la réception sont effectuées consécutivement avec au moins deux éléments d'antenne.

**20.** Procédé selon la revendication 15 ou 16, **caractérisé en ce que** l'émission et la réception sont effectuées simultanément avec au moins deux éléments d'antenne.

**21.** Procédé selon la revendication 15 ou 16, **caractérisé en ce qu'**au moins deux éléments d'antenne (12, 14 ; 13, 15) peuvent fonctionner simultanément en tant qu'émetteur et en tant que récepteur, dans lequel les plans de polarisation des au moins deux éléments d'antenne (12, 14 ; 13, 15) sont tournés l'un par rapport à l'autre.

# Fig. 1

# Fig. 2

# Fig. 3

Anzeige & Bedieneinheit — 54 / 56

Signalverarbeitung mit DSP oder μC & Gerätesteuerung — 50

Weginformation — 52

HF-Schaltungsteil mit zwei Messkanälen — 58
Messkanal 1/Richtung 1
Messkanal 2/Richtung 2
Steuerung über Ortsposition

Umschalter zwischen den Sensorflächen — 60

Infrarot-Sensoren — 64

weitere Sensoren optional, z.B. Kapazitiv und Induktiv — 62

10, 12, 14, 13, 11, 15

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10104863 A1
- WO 9901781 A1

- EP 0179601 A2